# EUROPEAN PATENT APPLICATION

(11) **EP 2 613 530 A1**
(43) Date of publication of application: **10.07.2013**
(21) Application number: 12305016.3
(22) Date of filing: 06.01.2012
(51) Int. Cl.: H04N 7/18

(54) **A method for video surveillance, a related system, a related surveillance server, and a related surveillance camera**

(71) Applicant: Alcatel Lucent, 75007 Paris (FR)
(72) Inventor: Van den Berghe, Steven, 9620 Zottegem (BE)
(74) Representative: ALU Antw Patent Attorneys

(57) **Abstract**

The present invention relates to a video surveillance system where this system comprises a surveillance camera for capturing video images of an observable area of the surveillance camera and a surveillance server for distributing the images captured by the surveillance camera (fully or partially) or parts thereof to each surveillance client device of a plurality of surveillance client devices for rendering the images captured or said parts/selection thereof. The surveillance camera and the server are coupled over a first link and the surveillance server is coupled to each surveillance client device. The video surveillance system further comprises a viewport selection part that is adapted to select an individual viewport from the images captured by the surveillance camera, for each surveillance client device of the plurality of surveillance client devices based upon a view port request from each surveillance client device of the plurality of surveillance client devices, wherein the video surveillance system further comprises a viewport optimization part that is able to determine an optimization action destined for said surveillance camera based a view port request from each surveillance client device of said plurality of surveillance client devices and a Viewport optimization Instructing part, that is able to instruct the camera to execute the optimization action for optimizing the observable area based on the viewport requests of each surveillance client device of the plurality of surveillance client devices.

## Description

The present invention relates to a method for video surveillance as described in the preamble of claim 1, a related system as described in the preamble of claim 2, a surveillance server as described in the preamble of claim 7 and a related surveillance camera as described in the preamble of claim 8.

Currently, surveillance systems are evolving from single client systems for CCTV streams (i.e. the control room) to multi-client systems, wherein e.g. surveillance officers equiped with tablets and smartphones using the video images from a single surveillance camera. Such video surveillance systems are well known in the art. Currently such video surveillance systems comprise a surveillance camera for capturing video images of an observable area of the surveillance camera and a surveillance server for distributing the captured images or parts thereof to each surveillance client device of a plurality of surveillance client devices. The captured images or parts thereof are used for rendering the images captured or said parts thereof at each of the surveillance client devices. Such part is a selection of a captured image that covers the observable area of the surveillance camera. Such video surveillance system further comprises means for viewport selection that is able to select an individual viewport from the images captured by said surveillance camera, and forwarded towards a surveillance server, for each surveillance client device of said plurality of surveillance client devices based upon a viewport request from each surveillance client device of said plurality of surveillance client devices.

The Viewport is a selection from the observable area of the surveillance camera wherein a certain surveillance client is interested to view. The viewport request is an indication of the observable area of the surveillance camera a requesting surveillance client is interested in.

As each of these clients might want to focus on different areas that are observable by the camera. As long as this is on a fixed camera, virtual viewports can be used (zooming in to the required area). Modern surveillance camera's also have the ability to physcally Pan/Zoom When multiple observers are requesting different viewports, it is of course impossible to have multiple Pan, Tilt and Zoom (PTZ) settings.

Some camera's allow to virtual viewport, however always constraint by the current physical setting of a PTZ.

An objective of the present invention is to provide a system, a related method, a client devices and a surveillance server of the above known type but wherein it is possible to provide each of the client devices with a viewport that optimum fits with the viewport requested by each of the client devices.

According to the invention, this object is achieved by the method as described in claim 1, the system as described in claim 2, the surveillance server as described in claim 7 and a surveillance camera as described in claim 8.

Indeed, by first based on the viewport requests from each surveillance client device of the plurality of surveillance client devices, determining an optimization action, which is destined for the surveillance camera, based upon which the surveillance camera is to provide with an optimum observed area in order to be able to optimum serve all viewport request from each of the plurality surveillance client devices and subsequently instructing the surveillance camera to execute the optimization action for optimizing the observable area based on the viewport requests of each surveillance client device of said plurality of surveillance client devices.

An additional advantage of the present invention is that due to the optimization of the observable area based on the viewport requests of each surveillance client device of the plurality of surveillance client devices, less data (streams) need to be conveyed from surveillance camera towards surveillance server in this way optimizing the required bandwidth for conveying the video images from camera to server. Hence it is possible to convey less data over the link between the surveillance camera and the coupled server, as the observable area of the surveillance camera is optimized to optimum cover the requested viewports of each of the surveillance client devices and only the image data covering this optimized observable area of the camera needs to be conveyed over the link between the surveillance camera and the coupled server.

Another characteristic feature of the present invention is described in claim 3.

The video surveillance system further comprises a Viewport optimization part that is adapted to execute the actual optimization action for optimizing the observable area based on the viewport requests of each surveillance client device of the plurality of surveillance client devices.

The optimization action, in case of a surveillance camera is a Pan Tilt Zoom surveillance Camera, may include the adapting of at least one of the pan, the tilt or zoom of the surveillance camera and in case of a High definition surveillance camera, the Optimization action may include the action of selecting tiles from the entire observable area of the surveillance camera. By selecting, in conformance with the optimization action, at least one tile from a plurality of tiles together covering the observable area.

Alternatively or additionally the optimization action may include the application of an algorithm by the surveillance camera where the algorithm may be a filtering algorithm selecting elements from the observable area where the selection is performed based on the viewport requests of each surveillance client device of the plurality of surveillance client devices in such way that each request can be served in an optimum manner.

Another characteristic feature of the present invention is described in claim 4 and claim 10.

In case the surveillance camera is a Pan Tilt Zoom surveillance Camera, the Optimization action may include the adapting of at least one of the pan, the tilt or zoom of the surveillance camera. By changing, in conformance with the optimization action, at least one of the pan, the tilt or zoom of the surveillance camera, the observable area based on the viewport requests of each surveillance client device of said plurality of surveillance client devices is changed in such way that each request can be served in an optimum manner.

Another characteristic feature of the present invention is described in claim 5 and claim 11.

In case the surveillance camera is a tile generating camera capable of encoding the observed image in parts (e.g. rectangular tiles), the Optimization action may include the action of selecting parts from/of the entire observable area of the surveillance camera. By selecting, in conformance with the optimization action, at least one tile from a plurality of tiles covering the observable area, the observable area based on the viewport requests of each surveillance client device of said plurality of surveillance client devices is changed in such way that each request can be served in an optimum manner.

Another characteristic feature of the present invention is described in claim 6 and claim 12.

The Optimization action includes the applying an algorithm by the surveillance camera where the algorithm may be a filtering algorithm selecting elements from the observable area where the selection is performed based on the viewport requests of each surveillance client device of the plurality of surveillance client devices in such way that each request can be served in an optimum manner.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the video surveillance system, wherein the implementation of the present invention is realized.
FIG. 2 represents the functional representation of the surveillance server VSS of the video surveillance system according to the present invention.
FIG.3 represents the initial observable area and the initially requested viewports of the respective surveillance client devices SCD1, SCD2, SCD3.
FIG.4 represents the optimized observable area and the initially requested viewports of the respective surveillance client devices SCD1, SCD2, SCD3.

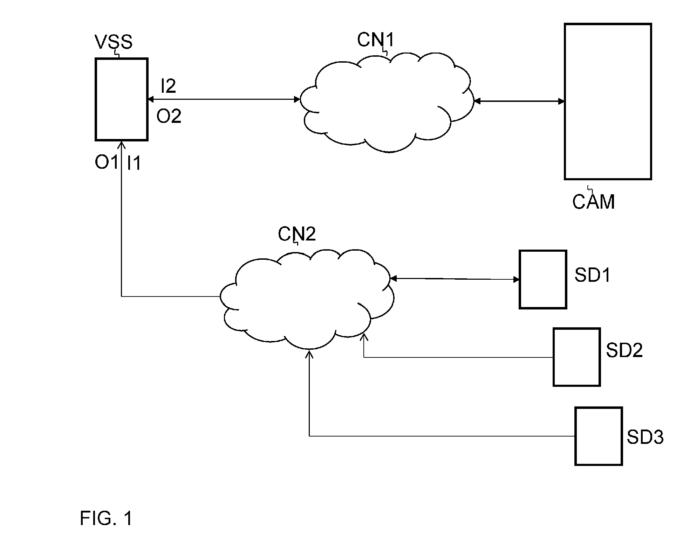

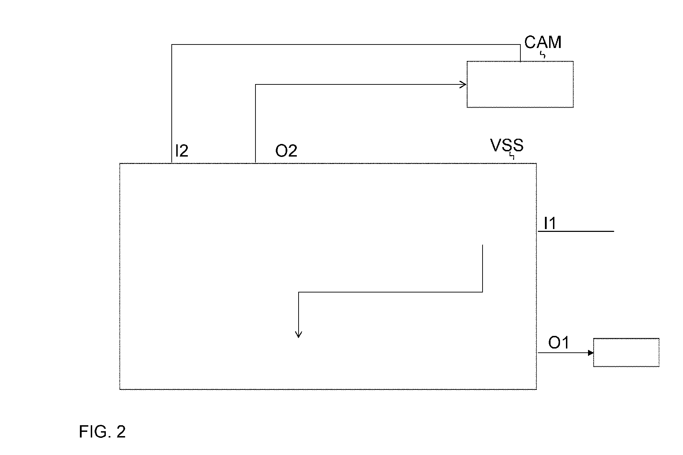

In the following paragraphs, referring to the drawings, an implementation of the method and the related devices according to the present invention will be described. In the first paragraph of this description the main elements of this network as presented in FIG. 1 and FIG.2 are described. In the second paragraph, all connections between the before mentioned network elements and described means are defined. In the succeeding paragraph the actual execution of the method for video surveillance is described.

A first essential element of the present invention is a surveillance server VSS being a server for selecting individual viewports from images captured by a surveillance camera, for each surveillance client device of said plurality of surveillance client devices SCD1, SCD2, SCD3 based upon a viewport request from each surveillance client device and subsequently distributing these viewports to the respective requesting client devices of the plurality of requesting devices.

A viewport is a selection from the observable area of the surveillance camera wherein a certain surveillance client is interested to view. The viewport request is an indication of the observable area of the surveillance camera a requesting surveillance client is interested in.

The surveillance server VSS being a server located in the internet or alternatively -being located at the surveillance camera site.

A further essential element of the present invention is the surveillance camera that is able to capture video images of an observable area of the surveillance camera CAM and is able to subsequently forward the captured video images towards the surveillance server VSS.

Such surveillance camera may be a PTZ camera, a tile generating camera or an active filtering camera.

Still further essential elements are the surveillance client devices CD1, CD2, CD3.

Although in this embodiment only three such surveillance client devices are described usually there will be more such devices.

Such surveillance client devices may be a control room with several displays, tablet PC's, smart-phones or other suitable devices for receiving video images captured by a surveillance camera.

The surveillance camera CAM and the surveillance server VSS in this embodiment are coupled over any suitable network. One specific example is where cameras are distributed across the city, connected to a (wireless or wire line) backbone network. They send the appropriate streams to the VSS.

Further, the surveillance server VSS and the surveillance client devices CD1, CD2, CD3 each are also coupled over a network (wireless or wire line) and vary in size and capabilities (PC terminals, tablets and smart phones).

The Surveillance server VSS first comprises a viewport request reception part VRRP that is able to receive viewport requests from each of the of surveillance client devices SCD1, SCD2, SCD3 and a viewport selection part VSP that is adapted to select an individual viewport from the (observable area of the camera) images captured by the surveillance camera, for each respective surveillance client device of the plurality of surveillance client devices SCD1, SCD2, SCD3 based upon a view port request from each surveillance client device of the plurality of surveillance client devices. The Surveillance server VSS additionally comprises an image reception part IRP that is adapted to receive the captured video images covering the observable area of the surveillance camera CAM which are subsequently forwarded towards the surveillance server VSS and a viewport forwarding part VFP that is adapted to forward a requested viewport towards each surveillance client device of the plurality of surveillance client devices SCD1, SCD2, SCD3.

The Surveillance server VSS further comprises a viewport optimization part VOP that is adapted to determine an optimization action destined for the surveillance camera CAM based on a view port request from each surveillance client device of the plurality of surveillance client devices and additionally comprises a Viewport optimization Instructing part VOIP that is adapted to instruct the camera CAM to execute the optimization action for optimizing the observable area based on the viewport requests of each surveillance client device of the plurality of surveillance client devices SCD1, SCD2, SCD3.

Such instruction may be executed by means of signaling to the camera. This signaling can take the form of HTTP calls to the camera to change PTZ settings, encoding and/or filtering parameters. Other approaches might use RTSP or proprietary camera APIs. The viewport reception part VRRP has an input-terminal I1 that is at the same time an input-terminal of the surveillance server VSS. The viewport reception part VRRP is coupled with an output to an input of the viewport optimization part VOP, that in turn is coupled with an output to an input of the Viewport optimization Instructing part VOIP, The Viewport optimization Instructing part VOIP furthermore has an output-terminal that is at the same time an output-terminal 02 of the surveillance server VSS.

The image reception part IRP has an input-terminal I2 that is at the same time an input-terminal of the surveillance server VSS. The image reception part IRP further is coupled with an output to an input of the viewport selection part VSP that further is coupled with an output to an input of the viewport forwarding part VPF.

The Viewport forwarding part VFP furthermore has an output-terminal that is at the same time an output-terminal O1 of the surveillance server VSS.

The Surveillance Camera CAM comprises a Viewport optimization executing part VOEP that is adapted to execute the optimization action for optimizing the observable area based on the viewport requests of each surveillance client device of said plurality of surveillance client devices SCD1, SCD2, SCD3.

In case the Surveillance Camera CAM is a PTZ-camera, the Viewport optimization executing part VOEP that is able to adapt at least one of the pan, tilt or zoom of said camera.

Otherwise, in case the Surveillance Camera CAM is a high definition camera the Viewport optimization executing part VOEP that is able to select tiles of said observable area in case said camera is a tile generating camera or an active filtering camera.

Alternatively or additionally the optimization action may include the application of an algorithm by the surveillance camera where the algorithm may be a filtering algorithm selecting elements from the observable area where the selection is performed based on the viewport requests of each surveillance client device of the plurality of surveillance client devices in such way that each request can be served in an optimum manner.

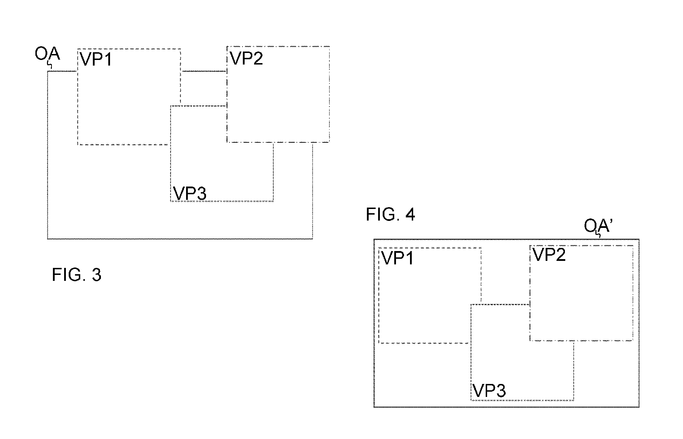

Potential algorithms could filter out objects of interest (cars, persons) and only transmit those to reduce the amount of information to be sent and interpreted. Other potential algorithms might be to perform some form of temporal sampling, focusing on certain image properties (e.g. filter out points in the image that move at a certain speed). In order to explain the present invention it is assumed that the surveillance camera initially covers a first observable area OA (see fig.3). The surveillance camera CAM captures the video images covering the observable area OA of the surveillance camera where the observable area is determined by the Pan, Tilt and the Zoom of the surveillance camera. Subsequently the captured video images covering the observable area OA are forwarded towards the surveillance server VSS that distributes the video images captured by the surveillance camera fully or partially towards each surveillance client device of a plurality of surveillance client devices SCD1, SCD2, SCD3 for rendering these video images at the respective surveillance client devices. In case video images captured by the surveillance camera partially is distributed this may be a crop of the entire observable area OA e.g. being viewports VP1, VP2 or VP3.

Further it is assumed that each surveillance client device of the plurality of surveillance client devices SCD1, SCD2, SCD3 sends a specific viewport request, i.e. the client device SD1 sends a viewport request requesting viewport VP1, the client device SD2 sends a viewport request requesting viewport VP2, the client device SD3 sends a viewport request requesting viewport VP3. Each of the viewport requests of the respective surveillance client device are received by the viewport reception part VRRP of the surveillance server VSS. All viewport requests are subsequently analyzed by the viewport optimization part VOP for determining an optimization action destined for the surveillance camera based on the view port request from each surveillance client device of said plurality of surveillance client devices SCD1, SCD2, SCD3. The viewport optimization part VOP determines that the viewport VP1 and VP2 respectively requested by the surveillance client devices SD1 and SD2 cannot be served in the current camera setting as they do not completely match the observable area OA of the camera (See FIG.3).

The optimization action in case the Surveillance Camera CAM is a PTZ-camera, determines the values of the Pan = P, Tilt= D and Zoom = A in such way that the optimized observable area OA' is chosen in such way that each requested viewport VP1, VP2 and VP3 can be served by the surveillance camera CAM (see FIG. 4).

Further, after determining the optimization action for selecting the optimized observable area OA', the Viewport optimization Instructing part VOIP sends an instruction to the camera CAM to execute the optimization action for optimizing the observable area based on said viewport requests of each surveillance client device of said plurality of surveillance client devices SCD1, SCD2, SCD3 which means that the camera sets the values of the Pan = P, Tilt= D and Zoom = A so that the optimized observable area OA' is selected by the camera CAM in order enable the serving of each requested viewport VP1, VP2 and VP3 by the surveillance camera CAM (see FIG. 4).

After the setting, by means of Viewport optimization executing part VOEP, of the values of the Pan = P, Tilt= D and Zoom = A, the optimized observable area OA' is selected by the camera CAM so that the camera is able to capture video images covering the entire optimized observable area OA'. The captured video images of the optimized observable area OA' are forwarded towards the surveillance server VSS and received by the Image reception part IRP.

The viewport selection part VSP then selects an individual viewport, i.e. being VP1, VP2 and VP3, from the video images captured by said surveillance camera, for each of the respective surveillance client devices SCD1, SCD2, SCD3 based upon a view port request from each surveillance client device. In practice the captured video images covering the optimized observable area OA' are decoded for enabling the selection of the respective viewports from the captured video images. Thereafter, after generating the selected viewports VP1, VP2, VP3 from the decoded captured video images the respective viewports are encoded in the suitable format ( required for proper rendering the viewport at the requesting surveillance client device).

These encoded viewports are distributed by the viewport forwarding part VFP to each of the respective requesting surveillance client device SCD1, SCD2, SCD3 for rendering these video images at the respective surveillance client devices.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for video surveillance, said method including the capturing of video images of an observable area of a surveillance camera (CAM) by said surveillance camera and a surveillance server (VSS) distributing said images captured by said surveillance camera or parts thereof to each surveillance client device of a plurality of surveillance client devices (SCD1, SCD2, SCD3) for rendering said images captured or said parts thereof, said surveillance camera (CAM) and said server being coupled over a first link and said surveillance server being coupled to each surveillance client device of said plurality of surveillance client devices (SCD1, SCD2, SCD3), wherein said video surveillance method further comprises the steps of :
a. selecting an individual viewport from said images captured by said surveillance camera, for each surveillance client device of said plurality of surveillance client devices (SCD1, SCD2, SCD3) based upon a view port request from each surveillance client device of said plurality of surveillance client devices (SCD1, SCD2, SCD3), **CHARACTERISED IN THAT** said video surveillance method further comprises the steps of:
b. determining an optimization action destined for said surveillance camera based a view port request from each surveillance client device of said plurality of surveillance client devices (SCD1, SCD2, SCD3); and
c. instructing said camera (CAM) to execute said optimization action for optimizing said observable area based on said viewport requests of each surveillance client device of said plurality of surveillance client devices (SCD1, SCD2, SCD3).

2. A video surveillance system, said system comprising a surveillance camera (CAM) for capturing video images of an observable area of said surveillance camera and a surveillance server (VSS) for distributing said images captured by said surveillance camera or parts thereof to each surveillance client device of a plurality of surveillance client devices (SCD1, SCD2, SCD3) for rendering said images captured or said parts thereof, said surveillance camera (CAM) and said server being coupled over a first link and said surveillance server being coupled to each surveillance client device of said plurality of surveillance client devices (SCD1, SCD2, SCD3), wherein said video surveillance system further comprises:
a. a viewport selection part (VSP), adapted to select an individual viewport from said images captured by said surveillance camera, for each surveillance client device of said plurality of surveillance client devices (SCD1, SCD2, SCD3) based upon a view port request from each surveillance client device of said plurality of surveillance client devices (SCD1, SCD2, SCD3), **CHARACTERISED IN THAT** said video surveillance system further comprises:
b. a viewport optimization part (VOP), adapted to determine an optimization action destined for said surveillance camera based a view port request from each surveillance client device of said plurality of surveillance client devices (SCD1, SCD2, SCD3); and
c. Viewport optimization Instructing part (VOIP), adapted to instruct said camera (CAM) to execute said optimization action for optimizing said observable area based on said viewport requests of each surveillance client device of said plurality of surveillance client devices (SCD1, SCD2, SCD3).

3. A video surveillance system, according to claim 2, **CHARACTERISED IN THAT** said video surveillance system further comprises a Viewport optimization executing part (VOEP), adapted to execute said optimization action for optimizing said observable area based on said viewport requests of each surveillance client device of said plurality of surveillance client devices (SCD1, SCD2, SCD3).

4. A video surveillance system according to claim 2, **CHARACTERISED IN THAT** said Optimization action includes adapting at least one of the pan, tilt or zoom of said camera in case said camera is a PTZ-camera.

5. A video surveillance system according to claim 2, **CHARACTERISED IN THAT** said Optimization action includes selecting tiles of said observable area in case said camera is a tile generating camera.

6. A video surveillance system according to claim 2, **CHARACTERISED IN THAT** said Optimization action includes applying an algorithm on said images captured in case said camera is an active filtering camera.

7. Surveillance server (VSS), for use in a video surveillance system according to claim 2, said video surveillance server comprising:
a. a viewport selection part (VSP), adapted to select an individual viewport from said images captured by said surveillance camera, for each surveillance client device of said plurality of surveillance client devices (SCD1, SCD2, SCD3) based upon a view port request from each surveillance client device of said plurality of surveillance client devices (SCD1, SCD2, SCD3), **CHARACTERISED IN THAT** said video surveillance server (VSS) further comprises:
b. a viewport optimization part (VOP), adapted to determine an optimization action destined for said surveillance camera based a view port request from each surveillance client device of said plurality of surveillance client devices (SCD1, SCD2, SCD3); and
c. Viewport optimization Instructing part (VOIP), adapted to instruct said camera (CAM) to execute said optimization action for optimizing said observable area based on said viewport requests of each surveillance client device of said plurality of surveillance client devices (SCD1, SCD2, SCD3).

8. Surveillance Camera (CAM), for use in a video surveillance system according to claim 2, **CHARACTERISED IN THAT** said video surveillance camera (CAM) further comprises a Viewport optimization executing part (VOEP), adapted to execute said optimization action for optimizing said observable area based on said viewport requests of each surveillance client device of said plurality of surveillance client devices (SCD1, SCD2, SCD3).

9. Surveillance Camera (CAM) according to claim 8, **CHARACTERISED IN THAT** said video surveillance camera (CAM) further comprises:
a. a viewport selection part (VSP), adapted to select an individual viewport from said images captured by said surveillance camera, for each surveillance client device of said plurality of surveillance client devices (SCD1, SCD2, SCD3) based upon a view port request from each surveillance client device of said plurality of surveillance client devices (SCD1, SCD2, SCD3), **CHARACTERISED IN THAT** said video surveillance system further comprises:
b. a viewport optimization part (VOP), adapted to determine an optimization action destined for said surveillance camera based a view port request from each surveillance client device of said plurality of surveillance client devices (SCD1, SCD2, SCD3).

10. Surveillance Camera (CAM) according to claim 8 or claim 9, **CHARACTERISED IN THAT** said Optimization action includes adapting at least one of the pan, tilt or zoom of said camera in case said camera is a PTZ-camera.

11. Surveillance Camera (CAM) according to claim 8 or claim 9, **CHARACTERISED IN THAT** said Optimization action includes selecting tiles of said observable area in case said camera is a tile generating camera.

12. Surveillance Camera (CAM) according to claim 8 or claim 9, **CHARACTERISED IN THAT** said Optimization action includes applying an algorithm on said images captured in case said camera is an active filtering camera.
